# EUROPEAN PATENT APPLICATION

(11) **EP 3 457 462 A1**
(43) Date of publication of application: **20.03.2019**
(21) Application number: 17190874.2
(22) Date of filing: 13.09.2017
(51) Int. Cl.: H01M 2/26, H01M 4/66, H01M 2/10, H01M 10/052

(54) **RECHARGEABLE BATTERY**

(71) Applicant: Wyon AG, 9050 Appenzell Steinegg (CH)
(72) Inventor: Spreafico, Clelia, 9053 Teufen AR (CH)
(74) Representative: Keller & Partner Patentanwälte AG

(57) **Abstract**

A battery, in particular a rechargeable battery, with improved deep discharge stability is provided. The battery comprises at least one positive electrode with a positive current collector and at least one negative electrode with a negative current collector. The negative current collector is made of an electrically conductive non-metallic structural material, in particular structural carbon. Preferably, the battery is a lithium or lithium ion battery.

## Description

### Technical Field

The invention relates to a battery, in particular to a rechargeable battery. The invention also relates to the use of a battery and to a method for manufacturing the battery.

### Background Art

Rechargeable lithium ion batteries are one of the preferred electrochemical energy storage devices for portable application, due to higher energy density and longer cycle life compared to other systems.

Known rechargeable lithium ion batteries comprise a positive electrode having an active material as for example LiCoO₂ supported on a metallic current collector as for example aluminium, and a negative electrode having an active material as for example carbonaceous material supported on a metallic current collector as for example copper. The two electrodes are spaced by a separator. An electrolyte is present to promote ionic conductivity between the two electrodes. Current collectors are used to collect the electric current from the electrodes and conduct it to the outer poles of the battery. Current collectors are selected according to their electrochemical stability. Often, copper is used as a current collector at the negative electrode as it is stable at the normal operating potential of the negative electrode of less than 0.7 V. However, copper should not be used as a current collector at the positive electrode, as copper dissolves at the typical operating potentials of the positive electrode of more than 3 V. On the other hand, aluminium is stable at higher potentials and therefore suitable as current collector at the positive electrode while it tends to alloy with lithium at the operative potential of the negative electrode of less than 0.7 V and, therefore, should not be used as current collector at the negative electrode. The overall battery voltage is given by the difference between positive electrode potential and negative electrode potential.

For fields of use in which a lithium ion battery is difficult to replace or remains inactive for a long period of time, one of the main safety issues is caused by the risk of over-discharging the battery, i.e. discharging of the battery below the lower voltage limit of 3 V. If a battery is discharged below said voltage limit of 3 V, the potential of the negative electrode rapidly increases above the copper dissolution limit. This causes corrosion of copper if used as current collector in the negative electrode, which increases the risk of internal short circuits and damages irreversibly the battery performance.

To avoid over-discharge, protection circuits are typically used to disconnect the battery from its load if the voltage falls below a predefined lower limit. Such protection circuits are known as low voltage cut-off protection circuits. Despite such protection circuits, over-discharge can still occur, in particular if a battery remains inactive and is not recharged for extended periods of time. Therefore, other protection strategies to avoid copper dissolution at the negative electrode are of importance, particularly in those application fields such medical devices, aerospace and military devices, in which battery replacement or maintenance can be difficult or expensive.

Such other protection strategies to prevent dissolution of copper in the negative electrode include the use of an electrochemically more stable metal current collector or the introduction of additive components in the electrode active material.

US 2011/0133699 A1 (Medtronic, Inc., 2011) proposes the use of lithium titanate as active material in the negative electrode to increase the charge and discharge rates as well as to avoid plating of lithium. The main disadvantage of such an approach is the increased operating potential of the negative electrode of around 1.5 V in contrast to the approximately 0.1 V of the carbonaceous active material, which in turn limits the energy density of the battery.

US 8,535,831 B2 (Quallion LLC, 2009) suggests the use of stainless steel, nickel, titanium or other electrochemically stable metal current collectors as a replacement of copper negative current collectors to allow for discharge of the battery down to 0 V. Disadvantages of this approach are the increased weight and/or cost of the suggested battery compared to the conventional battery with copper negative electrode current collector.

US2012/003531 A1 (Medtronic, Inc., 2012) teaches the use of sulphide as active material in the negative electrodes to allow for a charging and discharging capacity below a corrosion potential of the current collector of the negative electrode.

US 5,053,297 (Sony Corporation, 1991) discloses an auxiliary active material to avoid the dissolution of the negative electrode current collector at the final stage of discharge.

US 2009/0325072 A1 (Hideaki et. al., 2009) discloses layered lithium compounds for the positive electrode.

The three previously mentioned inventions have the disadvantage of diminished volumetric capacity of the battery, as the auxiliary material having a smaller capacity occupies space potentially available for conventional, higher capacity materials.

US 6,699,623 B1 (E. I. du Pont de Nemours and Company, 2004) proposes the use of a layered graphite sheet as current collector for the positive electrode of a rechargeable lithium ion battery. The negative electrode is suggested to be brought into electronically conductive contact with a current collector which is preferably a metal foil or mesh, most preferably copper.

### Summary of the invention

It is the object of the invention to create a battery pertaining to the technical field initially mentioned which can withstand over-discharge without deteriorating safety and future battery performance. In particular, it is an object to create a battery which can withstand deep discharge down to zero Volt without compromising the future battery performance or increasing safety risks.

The solution of the invention is specified by the features of claim 1. According to the invention, a battery, in particular a rechargeable battery, comprises at least one positive electrode with a positive current collector and at least one negative electrode with a negative current collector. The negative current collector is made of an electrically conductive non-metallic structural material.

An electrically conductive non-metallic structural material used as a negative current collector in a battery has the advantage of being stable even at over-discharge of the battery, and in particular even during deep-discharge down to zero Volt. In other words, no corrosion of the electrically conductive non-metallic structural material will happen even at over-discharge of the battery and, in particular, even during deep-discharge down to zero Volt. Further, the electrically conductive non-metallic structural material has enough mechanical stability and/or strength to provide a support for the active material of an electrode, in particular of an active material of the negative electrode called negative active material. Especially, if the active material is brittle or has a sponge-like structure and, consequently, might not be able to maintain a desired form in a battery case by itself, a current collector providing a mechanical structure able to maintain the active material in a desired and/or predetermined form is advantageous. Therefore, such batteries have a significantly reduced risk of internal short circuits and irreversibly damaged performance caused by deep-discharge, and such batteries have an increased lifetime. Another advantage of the battery according to the invention is that a negative electrode comprising a current collector made of electrically conductive non-metallic structural material can be used in combination with any positive electrode regardless of the type of current collector used therein. Further, negative electrodes with electrically conductive non-metallic structural material can be used in any battery case as for example button cells, standard cases and customized cases, as well as in any electrode arrangement as for example wound electrodes, meandering or folded electrodes, and/or stacked electrodes. In addition, the electrically conductive non-metallic structural material can be coated with active material to form an electrode of a battery and such electrode can be used like a conventional electrode in the manufacturing of a battery. In other words, the production process of a battery according to the invention can be similar to today's available production processes for batteries.

A current collector provides an electrically conductive path form the active material of an electrode to a contacting fixture electrically connecting one or more current collectors and/or electrically connecting a current collector and an outer pole of a battery cell. The current collector provides mechanical support of the active material of an electrode. The current collector can have a high surface area to provide direct and good electrical contact to the active material of the electrode.

A structural material is a material which has the ability to withstand predetermined external forces and, thereby, maintain a predetermined form.

The electrically conductive non-metallic structural material can for example be any electrically conductive plastic, electrically conductive structural carbon and/or electrically conductive semiconductor.

The electrical conductivity of the electrically conductive non-metallic structural material can be comparable to the electrical conductivity of conventional metallic current collectors. The electrical conductivity of the electrically conductive non-metallic structural material preferably is at least 10³ S/m, in particular at least 10⁴ S/m, and more particularly at least 10⁵ S/m.

The strength of the electrically conductive non-metallic structural material can be comparable to the strength conventional metallic current collectors. The tensile strength preferably is at least 10 N/mm², in particular at least 50 N/mm², and more particularly at least 250 N/mm².

In a preferred embodiment, the negative current collector comprises a foil or a sheet of an electrically conductive non-metallic structural material.

Foils or sheets of electrically conductive non-metallic structural material have been proven most advantageous for use as current collector. They allow for batteries having a high energy density.

Foils and/or sheets can comprise a layer or multiple layers of electrically conductive non-metallic structural material.

The thickness of the foil and/or sheet preferably is less than 5 mm, in particular less than 1 mm, more particularly less than from 200 µm, most particularly less than 50 µm, and especially less than 30 µm.

Alternatively and/or in addition, fibres and/or tubes of electrically conductive non-metallic structural material can be used as well. Such fibres and/or tubes can be woven to form a fabric having excellent mechanical stability and/or mechanical strength.

In another preferred embodiment, the electrically conductive non-metallic structural material comprises structural carbon.

Experiments have shown that structural carbon provides an excellent mechanical stability and/or strength, electrical conductivity and electrochemical stability when used as negative current collector during deep-discharge of a battery. Structural carbon and in particular a layered graphite sheet can act as self-standing current collector and as a substrate for the active material of the negative electrode. Besides providing an excellent stability and/or strength, structural carbon also can provide a flexibility allowing for bending the current collector in any desired form. Further, current collectors comprising structural carbon have a reduced weight compared to current collectors made of metallic material resulting in a lighter battery.

Structural carbon can be any allotrope of carbon forming at least a two-dimensional lattice with an electrical conductivity showing a metallic behaviour or a semiconductor behaviour. Examples of electrically conductive structural carbon may include but are non limited to graphite, fullerences and or graphene. Structural carbon can be a layered graphite sheet as for example a single-layered graphene sheet. However, the structural carbon can be of any other allotrope, including charcoal, carbon nanotubes and fullerences.

Structural carbon can have an electrical conductivity of 10⁵S/m or more.

The thickness of structural carbon can vary according to the battery architecture. The structural carbon can demonstrate a mechanical strength sufficient to support the active material. At the same time, the structural carbon can be sufficiently thin to be incorporated in a small battery. Further, structural carbon can be sufficiently flexible to allow bending and folding for insertion in a wound or meandering cell. The thickness of the structural carbon preferably is in a range from 1 µm to 10 mm, in particular from 1 µm to 1 mm, more particularly from 1 µm to 500 µm, most particularly from 3 µm to 100 µm, and especially from 5 µm to 75 µm.

Structural carbon is different from the carbon used as active material in the negative electrode of lithium batteries or lithium ion batteries. In contrast to structural carbon, the carbon used in the active material is a powder which does not provide sufficient mechanical stability to be self-standing. Carbon used as active material can be processed in a suspension while structural carbon can be manufactured using a pyrolytic process.

Alternatively or in addition to structural carbon, the electrically conductive non-metallic structural material may comprise an electrically conductive plastic and/or an electrically conductive semiconductor.

Electrically conductive plastics can for example be intrinsically conductive polymers and/or organic conductive polymers. The main chain thereof may contain aromatic cycles and/or double bonds. There might be heteroatoms present or not present. If present, such heteroatoms might be nitrogen-containing and/or sulphur-containing.

Examples of electrically conductive semiconductor may include but are not limited to silicon, germanium and gallium. The electrical conductivity of electrically conductive semiconductors can be adjusted for by doping, for example.

In another preferred embodiment, the positive current collector is made of an electrically conductive non-metallic structural material, in particular of structural carbon.

Using an electrically conductive non-metallic structural material, in particular structural carbon, within both the negative current collector and the positive current collector simplifies the production process of a battery according to the invention.

However, the positive current collector can also be made conventionally, i.e. of a metallic material.

In another preferred embodiment, the battery is a lithium battery or a lithium ion battery.

Experiments have shown that a lithium battery and/or a lithium ion battery shows excellent deep discharge stability when the negative current collector is made of an electrically conductive non-metallic structural material.

However, any other suitable known battery system can use a negative current collector made of an electrically conductive non-metallic structural material.

In another preferred embodiment, the battery has a volume smaller than 30 cm³, in particular smaller than 10 cm³, and most particularly smaller than 5 cm³.

Advantageously, small and/or smallest batteries can use a negative current collector made of an electrically conductive non-metallic structural material. In particular, button cells and/or batteries with customized case can be manufactured with a negative current collector made of an electrically conductive non-metallic structural material.

Alternatively and or in addition, any battery size and any battery case can be manufactured with a negative current collector made of an electrically conductive non-metallic structural material.

In another preferred embodiment, the battery comprises two or more positive electrodes each having a positive current collector and two or more negative electrodes each having a negative current collector. The battery further comprises at least one contacting fixture having at least one contacting element arranged between adjacent negative current collectors and/or arranged between adjacent positive current collectors. The at least one contacting element is located between such areas of the positive current collectors and/or negative current collectors which are not covered by active material.

A contacting fixture with contacting elements can be built very small and space saving, in particular when having a battery with stacked electrodes. Consequently, more space is available for the active material which increases the power density and/or capacity of the battery.

In another embodiment, the contacting fixture comprises a clamping device which clamps the at least one contacting element and the at least two adjacent current collectors.

In another embodiment, the at least two adjacent current collectors each comprise a hole. The at least one contacting element is a sleeve. The clamping device comprises a pin and a counter bearing. The pin comprises a first end and a second end. At the first end of the pin, a flange is arranged, and at the second end, a connection to the counter bearing is arranged. The pin passes through the holes of the at least two adjacent current collectors and through the at least one contacting element. The at least one contacting element and such areas of the at least two current collectors being around the hole and being not covered by active material, are arranged between the flange and the counter bearing.

In another embodiment, the connection of the pin with the counter bearing comprises a rivet, a thread and/or a weld.

In another embodiment, the contacting fixture comprises a cover.

For further details regarding the contacting fixture and/or the cover, it is referred to the European patent application titled "Akkumulator und Verfahren zur Herstellung desselben" of the same applicant and filed on the same day as the present application.

Alternatively and/or in addition to the contacting fixture, contacting of the negative current collectors and/or positive current collectors can be done in any conventional way, including, but not limited to direct welding (without contacting elements) and/or pressure contacting as direct riveting and/or direct screwing (again without contacting elements in between).

According to another aspect of the invention, the battery can be used in medical, aerospace and/or military devices.

Due to its deep discharge stability, the battery according to the invention can be used with advantage in applications and devices where a replacement of the battery is difficult or inconvenient, and where recharging may not occur immediately after discharge of the battery but possibly after extended periods of time, only.

However, the battery according to the invention can be used as well in any other conventional application and device.

According to another aspect of the invention, a method for manufacturing the battery comprises the step of providing at least one positive electrode with a positive current collector. The method further comprises the step of providing at least one negative electrode by coating at least one negative current collector made of an electrically conductive non-metallic structural material with negative active material. Additionally, the method comprises the step of conventionally assembling the battery.

The advantage of the method is that conventional production machinery and/or equipment can be used. The coating of the at least one negative current collector can, for example, be done by slurry coating, chemical vapour deposition and/or sputtering.

In a preferred embodiment, the step of providing at least one positive electrode with a positive current collector comprises the step of coating at least one positive current collector made of an electrically conductive non-metallic structural material with positive active material.

The advantage of this embodiment is that the same production machinery and/or equipment can be used for both providing negative electrodes and positive electrodes. The coating of the at least one positive current collector can, for example, be done by slurry coating, chemical vapour deposition and/or sputtering.

Other advantageous embodiments and combinations of features come out from the detailed description below and the totality of the claims.

### Brief description of the drawings

The drawings used to explain the embodiments show:
- Fig. 1: a cross section of a battery with electrically conductive non-metallic negative electrode current collector and a metallic positive current collector, and
- Fig. 2: a cross section of a battery with electrically conductive non-metallic negative electrode current collector and electrically conductive non-metallic positive current collector, and
- Fig. 3: a cross section of a battery with electrically conductive non-metallic negative electrode current collector and a contacting fixture having contacting elements.

In the figures, the same components are given the same reference symbols.

### Preferred embodiments

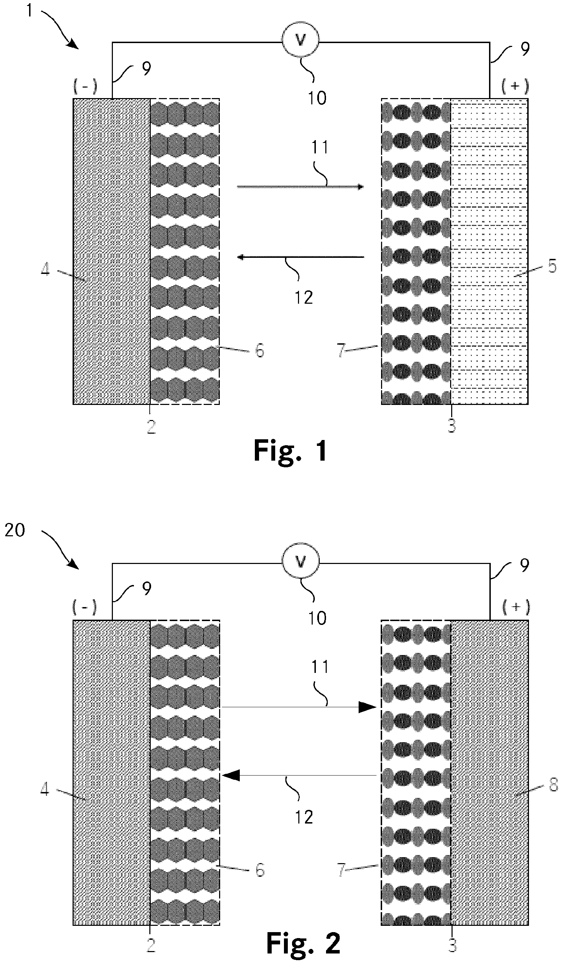

Fig. 1 shows an embodiment of a battery 1 comprising a lithium ion rechargeable battery cell. Battery 1 comprises a negative electrode 2. The negative electrode 2 comprises a negative current collector 4 made of an electrically conductive non-metallic structural material. The negative electrode 2 further comprises a negative active material 6, for example carbonaceous material. The negative current collector 4 and the negative active material 6 are electrically connected. The negative current collector 4 is further connected to a contacting fixture 9, which is finally connected to a load or charger 10. Battery 1 further comprises a positive electrode 3. The positive electrode 3 comprises a metallic positive current collector 5. For example, the metallic positive current collector 5 is made of aluminium. The positive electrode 3 further comprises a positive active material 7, as for example LiCoO₂ or LiFePO₄. The battery 1 comprises also a lithium electrolyte (not shown) which can be either in a liquid, a gel or a solid form. Optionally, the battery 1 comprises a separator to keep the positive electrode 2 and the negative electrode 3 spaced from each other. The metallic positive current collector 5 is further connected to a contacting fixture 9, which is finally connected to a load or charger 10. If the load or charger 10 is operated to discharge the battery 1, the ions (not shown) move within the electrolyte in a discharge direction 11. If the load or charger 10 is operated to charge the battery 1, the ions (not shown) move within the electrolyte in a charge direction 12. In this particular embodiment, the negative current collector 4 of the negative electrode 2 is made of a graphite sheet, as for example Laird TGON 9000. However, other graphite sheets, as well as pyrolytic graphite sheets can be used as well.

Fig. 2 shows another embodiment of a battery 20. In contrast to Fig. 1, the positive electrode 3 comprises a non-metallic positive current collector 8, similar to the negative current collector 4. The non-metallic positive current collector 8 is made of an electrically conductive non-metallic structural material. All other features of the embodiment shown in Fig. 2 are identical with the features shown in Fig. 1 and are not explained again.

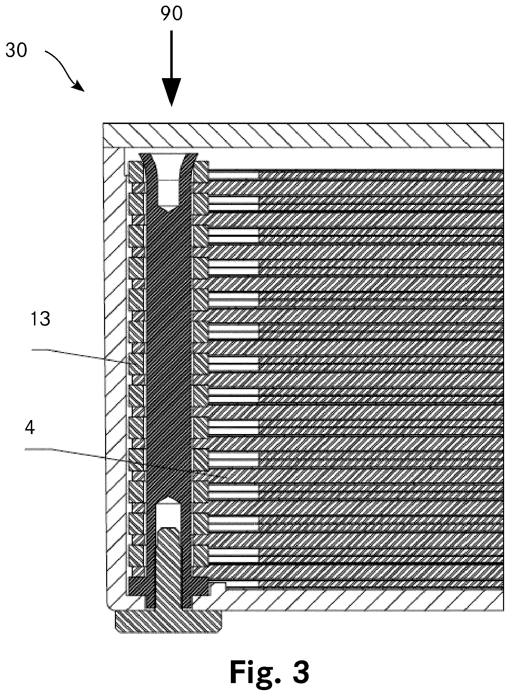

Fig. 3 shows another embodiment of a battery 30. In contrast or in addition to Figs. 1 and 2, a contacting fixture 90 comprises contacting elements 13 located between the negative current collectors 4 of adjacent negative electrodes 2. The negative current collectors 4 are not coated with negative active material 6 in such areas of the negative current collectors 4 where the contacting elements 13 are located. A plurality of negative electrodes 2 forms a stack of negative electrodes. Accordingly, a plurality of contacting elements 13 forms a stack of contacting elements with negative current collectors 4 in between to form contacting fixture 90.

Any or all of the features of the embodiments shown in Figs. 1 and 2 can be combined with any or all of the features of the embodiment shown in Fig. 3.

In addition or as alternative to the embodiment shown in Fig. 3, in a further embodiment (not shown) a contacting fixture 90 can be used to contact metallic positive current collectors 5 or non-metallic positive current collectors 8 of the positive electrodes. In addition or as alternative to the embodiment shown in Fig. 3, in another further embodiment (not shown) a stack of negative electrodes and/or a stack of positive electrodes can be used in combination with the features shown in Figs. 1 and/or 2.

In summary, it is to be noted that the present invention provides a battery with excellent deep discharge stability as well as method for manufacturing said battery using conventional machinery.

## Claims

1. Battery (1, 20, 30), in particular a rechargeable battery, comprising
a) at least one positive electrode (3) with a positive current collector (5, 8),
b) at least one negative electrode (2) with a negative current collector (4), **characterized in that**
c) the negative current collector (4) is made of an electrically conductive non-metallic structural material.

2. Battery (1, 20, 30) according to claim 1, **characterized in that** the negative current collector (4) comprises a foil or a sheet of an electrically conductive non-metallic structural material.

3. Battery (1, 20, 30) according to any one of the preceding claims, **characterized in that** the electrically conductive non-metallic structural material comprises structural carbon.

4. Battery (1, 20, 30) according to any one of the preceding claims, **characterized in that** the positive current collector (8) is made of an electrically conductive non-metallic structural material, in particular a structural carbon.

5. Battery (1, 20, 30) according to any one of the preceding claims, **characterized in that** the battery (1, 20, 30) is a lithium battery or a lithium ion battery.

6. Battery (1, 20, 30) according to any one of the preceding claims, **characterized in that** the battery (1, 20, 30) has a volume smaller than 30 cm³, in particular smaller than 10 cm³, and most particularly a volume smaller than 5 cm³.

7. Battery (1, 20, 30) according to any one of the preceding claims, **characterized in that** the battery (1, 20, 30) comprises
a) two or more positive electrodes (3) each having a positive current collector (5, 8),
b) two or more negative electrodes (2) each having a negative current collector (4), and
c) at least one contacting fixture (90) having at least one contacting element (13) arranged between adjacent negative current collectors (4) and/or arranged between adjacent positive current collectors (5, 8).

8. Use of a battery (1, 20, 30) according to any one of the preceding claims in medical, aerospace and/or military devices.

9. Method for manufacturing a battery (1, 20, 30) according to any one of claims 1 - 7, comprising the steps of:
a) providing at least one positive electrode (3) with a positive current collector (5, 8);
b) providing at least one negative electrode (2) by coating at least one negative current collector (4) made of an electrically conductive non-metallic structural material with active negative material,
c) conventionally assembling the battery (1, 20, 30).

10. Method according to claim 10, **characterized in that** the step of
providing at least one positive electrode (3) with a positive current collector (8)
comprises the step of
coating at least one positive current collector (8) made of an electrically conductive non-metallic structural material with positive active material.
